# EUROPÄISCHE PATENTANMELDUNG

(11) **EP 4 838 200 A1**
(43) Veröffentlichungstag der Anmeldung: **11.11.2026**
(21) Anmeldenummer: 26175123.4
(22) Anmeldetag: 28.04.2026
(51) Int. Cl.: G01N 11/04

(54) **PRÜFKAMMERANORDNUNG UND KAPILLAR-RHEOMETER MIT EINER PRÜFKAMMERANORDNUNG**

(30) Priorität: 06.05.2025 DE 102025117307
(71) Anmelder: Netzsch-Gerätebau GmbH, 95100 Selb (DE)
(72) Erfinder: Müller, Christian, 95186 Höchstädt im Fichtelgebirge (DE); Popp, Simon, 95482 Streitau (DE); Neumann, Georg, 95173 Schönwald (DE)

(57) **Zusammenfassung**

Die vorliegende Erfindung schafft eine Prüfkammeranordnung, insbesondere in einem Kapillar-Rheometer, umfassend eine mit einer Prüfmasse befüllbare, insbesondere beheizbare Prüfkammer mit einem Prüfkammerboden, einen in der Prüfkammer linear verschiebbar angeordneten Stempel mit einer Stempelstange und einer mit einem ersten Ende der Stempelstange verbundenen, die Prüfmasse druckbeaufschlagenden Stempelspitze und einer ein zweites Ende der Stempelstange aufnehmenden Verschiebeeinrichtung für eine Verschiebung des Stempels in der Prüfkammer in Richtung des Prüfkammerbodens, und eine in der Verschiebanordnung angeordnete, von dem Stempel entkoppelte und einen definierten Abstand zum zweiten Ende der Stempelstange aufweisende, mit der Verschiebeanordnung verschiebbare Messvorrichtung zur Erfassung einer Stempeldehnung, wobei in der Stempelstange eine sich in Richtung einer Längsachse der Stempelstange zwischen einem Grund der Stempelspitze und dem zweiten Ende erstreckende Bohrung zur Aufnahme eines sich zwischen dem Grund der Stempelspitze und dem zweiten Ende erstreckenden Messkörpers eingebracht ist und die Messvorrichtung einen relativ zum Messkörper beanstandet angeordneten Sensor zur berührungslosen Erfassung eines Abstandes zwischen dem Messkörper und der Messvorrichtung aufweist sowie ein Kapillar-Rheometer mit einer solchen Prüfkammeranordnung.

## Beschreibung

Die vorliegende Erfindung betrifft eine Prüfkammeranordnung, insbesondere in einem Kapillar-Rheometer sowie ein Kapillar-Rheometer mit einer solchen Prüfkammeranordnung.

Kapillar-Rheometer werden zur Untersuchung des Fließverhaltens und der rheologischen Eigenschaften viskoser und plastischer Materialien, beispielsweise von Polymeren und hochviskosen Fluidsystemen, eingesetzt. Das zu untersuchende Material wird unter definiertem Druck und bei in der Regel konstanter Temperatur durch eine Prüfkammer geführt und kann anschließend aus einer Düse extrudiert werden. Während des Durchflusses durch die Prüfkammer werden Messungen des Drucks am Eingang der Kapillare sowie der resultierenden Fließgeschwindigkeit des Materials durchgeführt. Durch die Variation des Drucks und die Messung der zugehörigen Volumen- oder Massenflussrate können Scherrate und Schubspannung des Materials bestimmt werden. Aus der Beziehung zwischen Schubspannung und Scherrate können Daten zur Viskosität abgeleitet und bei unterschiedlichen Schergeschwindigkeiten analysiert werden. Es kann so das Fließverhalten des Prüfmaterials unter realitätsnahen Prozessbedingungen abgebildet und eine rheologische Charakterisierung von Polymerschmelzen und pastösen Systemen durchgeführt werden. Die ermittelten Daten zur Temperatur- und Scherratenabhängigkeit der Viskosität dienen als Grundlage für die Prozessgestaltung, wie beispielsweise beim Spritzgießen und/oder der Extrusion von Kunststoffen.

Kapillar-Rheometer mit entsprechend ausgebildeten Prüfkammern ermöglichen eine pVT-Messung durch Bestimmung des Volumens zwischen einer Düse und der Spitze eines Stempels, der verwendet wird, um das Prüfmaterial druckbeaufschlagt durch die Prüfkammer zu führen und aus der Düse zu extrudieren. Der Stempel wie auch die Prüfkammer erfahren aufgrund hoher Prozesstemperaturen von bis zu 500°C und hohen herrschenden Drücken sowohl thermische als auch mechanische Dehnungen, die das Messergebnis verfälschen und in den Messergebnissen kompensiert werden müssen. Eine Methode zur Messung der Dehnung ist das Verwenden von Dehnmessstreifen. Diese weisen jedoch bezüglich des Temperaturbereiches eine nur bedingte Einsetzbarkeit auf. Weiterhin erfolgt die Aufheizung des Stempels und damit dessen temperaturbedingte Dehnung nicht gleichmäßig, sodass die Dehnungsmessung mit hohem Aufwand durch an mehreren Positionen angebrachte Dehnmessstreifen erfolgen müsste. Eine alternativ rein rechnerische Kompensation der Stempel- und Prüfkammerdehnung kann nur mit hohem Aufwand durchgeführt werden, da der Aufheizvorgang sowohl instationär als auch inhomogen, d.h. zeit- und ortsabhängig, erfolgt. Angesichts des in der Regel breiten Temperatur- und Druckbereichs bei der rheologischen Messung, ergibt sich daher ein mehrdimensionales Abhängigkeitssystem/-matrix, welches hinreichend nur mit sehr hohem rechnerischem Aufwand zu bestimmen wäre. Des Weiteren wäre eine komplett neue Berechnung erforderlich, falls konstruktive Änderungen vorgenommen werden (z. B. Änderung der Abmessungen, des Materials, der Geometrien des Stempels und/oder der Prüfkammer). Hinzu kommt, dass die rechnerische Kompensation weitaus weniger genau ist, was zum Teil auch an der Vielzahl der Fügestellen der einzelnen Komponenten im betrachteten Bereich der Prüfkammeranordnung liegt. Der Wärmeübergang an diesen Stellen, der sogenannte Fugenleitwert oder auch Kontaktwiderstand, ist nur schwer rechnerisch zu bestimmen und bedarf einer experimentellen Überprüfung. Der Fugenleitwert hat jedoch einen großen Einfluss auf den Wärmefluss in Baugruppen und damit auch auf die Temperatur darin, was sich unmittelbar auf die Wärmeausdehnung auswirkt. Andererseits ist sowohl der örtliche Wärmeeintrag inhomogen, als auch der Aufheizprozess instationär, was bedeutet, dass auch weite Teile der Anschlusskonstruktion bei ausschließlich rechnerischer Dehnungskompensation mitsimuliert werden müssten. Dies macht den Aufbau der Simulation sehr komplex, gemeinsam mit dem instationären Charakter ergeben sich lange Berechnungszeiten. Neben den thermischen Einflüssen kommen auch noch mechanische hinzu, so ist beispielsweise der E-Modul temperaturabhängig, was einen Einfluss auf die Verkürzung des Stempels in Folge der Spindelkraft hat. Diese Faktoren müssten bei rechnerischer Kompensation ebenfalls berücksichtigt werden, um mit theoretischen Methoden ein verwertbares Ergebnis zu erzielen.

Es ist daher Aufgabe der vorliegenden Erfindung, Möglichkeiten zur kostengünstigeren, einfacheren und genaueren Durchführung einer Dehnungskompensation in einer Prüfkammer eines Kapillar-Rheometers zu schaffen.

Erfindungsgemäß wird diese Aufgabe jeweils durch die Gegenstände der unabhängigen Ansprüche gelöst.

Gemäß einem ersten Aspekt der Erfindung ist eine Prüfkammeranordnung insbesondere in einem Kapillar-Rheometer vorgesehen. Die Prüfkammeranordnung umfasst dabei eine mit einer Prüfmasse befüllbare, insbesondere beheizbare Prüfkammer mit einem Prüfkammerboden, einem in der Prüfkammer linear verschiebbar angeordneten Stempel mit einer Stempelstange und einer mit einem ersten Ende der Stempelstange verbundenen, die Prüfmasse druckbeaufschlagenden Stempelspitze und einer ein zweites Ende der Stempelstange aufnehmenden Verschiebeeinrichtung für eine Verschiebung des Stempels in der Prüfkammer in Richtung des Prüfkammerbodens und eine in der Verschiebanordnung angeordnete, von dem Stempel entkoppelte, einen definierten Abstand zum zweiten Ende der Stempelstange aufweisende, mit der Verschiebeanordnung verschiebbare Messvorrichtung zur Erfassung einer Stempeldehnung, wobei in der Stempelstange eine sich in Richtung einer Längsachse der Stempelstange zwischen einem Grund der Stempelspitze und dem zweiten Ende erstreckende Bohrung zur Aufnahme eines sich zwischen dem Grund der Stempelspitze und dem zweiten Ende erstreckenden Messkörpers eingebracht ist und die Messvorrichtung einen relativ zum Messkörper beanstandet angeordneten Sensor zur Erfassung eines Abstandes zwischen dem Messkörper und der Messvorrichtung aufweist. Die Erfassung kann dabei wahlweise berührungslos, insbesondere induktiv oder durch einen berührenden Kontakt, ähnlich wie bei einer Messuhr, erfolgen.

Gemäß einem zweiten Aspekt der Erfindung ist ein Kapillar-Rheometer vorgesehen, das mit wenigstens einer solchen Prüfkammeranordnung ausgestattet ist.

Eine der vorliegenden Erfindung zugrunde liegende Idee besteht darin, Dehnungen der Stempelspitze und der Prüfkammer messtechnisch zu erfassen, sodass diese in den gewonnen Messdaten der Prüfmasse rechnerisch kompensiert werden können. Vorteilhaft wird damit die Bestimmung der Position der Stempelspitze bei Druck- und Temperaturbedingungen erreicht, die von den Ausgangsbedingungen abweichen. So kann die relative Positionsänderung des Kontaktpunktes zwischen Stempel und Prüfmasse ohne Einflüsse des Übertragungselements, d.h. der Verschiebeeinrichtung oder der umgebenden Prüfkammer, wie beispielsweise Kompression des Stempelmaterials durch Druck, geometrische Einflüsse durch z.B. Biegung oder Längenänderung durch Temperaturgradienten usw. erfasst werden. Die Messvorrichtung zur Erfassung der Position der Stempelspitze ist dazu außerhalb der Prüfkammer angeordnete und wird somit nicht durch die dortigen Temperaturbedingungen beeinflusst. Die Erfindung ermöglicht eine Dehnungskompensation durch konstruktive Anordnung eines von der Verschiebeinrichtung entkoppelten Messkörpers in der Stempelstange, wobei die Positionsänderung des Messkörpers mittels eines Positions- bzw. Abstandssensor erfasst wird. Es kann so die Bestimmung der Kontaktposition zwischen Messkörper und Stempelspitze exakt erfolgen. Eine Positionsänderung des durch die Temperatur- und Druckverhältnisse an der Stempelspitze unbeeinflussten Messkörpers entspricht somit im Wesentlichen der tatsächlichen Dehnung der Stempelspitze. Vorteilhaft wird dies dadurch erreicht, dass der Messkörper, der auf dem Grund der Stempelspitze aufsteht, die Dehnung des Stempels erfasst, dabei jedoch vom Stempel selbst entkoppelt angeordnet ist, sodass die erfassten Dehnungen mit den Informationen eines Wegmesssystems der Verschiebeeinrichtung verrechnet werden können und die Messgenauigkeit im Kapillar-Rheometer insgesamt erhöht wird. Die Methode der Längenkompensation durch Messung bietet Vorteile gegenüber einer rechnerischen Kompensation. Mit der Längenkompensation durch Messung werden die Längenänderungen direkt und in Echtzeit erfasst, unabhängig davon, ob die Dehnung thermisch oder mechanisch bedingt ist. Ein weiterer Vorteil ist, dass Messungen unabhängig von geometrischen Änderungen der Konstruktion oder der Werkstoffauswahl sind und bei Änderungen am Geräte- oder Komponentenaufbau des mit der erfindungsgemäßen Prüfkammeranordnung ausgestatteten Kapillar-Rheometers daher keine Berechnungsparameter angepasst werden müssen. Selbstverständlich können auch zwei und mehr der erfindungsgemäßen bau- und funktionsgleichen Prüfkammeranordnungen in einem Messgerät, insbesondere Kapillar-Rheometer angeordnet werden, um simultane Messungen durchzuführen und/oder den Probendurchsatz des Gerätes zu erhöhen.

Vorteilhafte Ausführungsformen und Weiterbildungen ergeben sich aus den auf die unabhängigen Ansprüche rückbezogenen Unteransprüchen sowie aus der Beschreibung unter Bezugnahme auf die Figuren.

Gemäß einer Ausführungsform der Prüfkammeranordnung ist ein Abstand von zwischen 0 und 10 mm, insbesondere von zwischen 0 und 5 mm, bevorzugt von zwischen 0 und 3 mm zwischen dem Sensor und dem Messkörper vorgesehen, wobei der Sensor eine Messauflösung von zwischen 0,001 mm und 0,008 mm, bevorzugt von 0,005 mm aufweist. Die enge Positionierung ermöglicht eine präzise Erfassung der Längenänderungen des Messkörpers und trägt zur Verbesserung der Genauigkeit der Positionsbestimmung der Stempelspitze bei. Durch die hohe Messauflösung des Sensors von 0,001 mm bis 0,008 mm, bevorzugt bei 0,005 mm, wird die detaillierte Erfassung selbst kleinster Verformungen und Dehnungen des Messkörpers ermöglicht. Dies hat den Vorteil, dass die Position der Stempelspitze bei Verformungen durch Druck, Temperatur oder mechanische Einwirkungen präzise bestimmt und bei der Bewertung der Messergebnisse zuverlässig kompensiert werden können, um eine höhere Messgenauigkeit in der rheologischen Messung zu erzielen. Die exakte Erfassung und Kompensation der Dehnung ist insbesondere in Hochdruck- und Hochtemperaturumgebungen in Kapillar-Rheometern von Bedeutung. Durch die erfindungsgemäße Prüfkammeranordnung wird somit insgesamt die Messgenauigkeit auf konstruktiv einfache Art und Weise erhöht und die Reproduzierbarkeit der Messungen verbessert.

Gemäß einer Weiterbildung ist in der erfindungsgemäßen Prüfkammeranordnung der Sensor als induktiver Abstandssensor ausgebildet, wobei der Messkörper an seinem dem Abstandssensor zugewandten Ende eine mit dem Abstandsensor in kommunikativer Verbindung stehende Lagemarkierung, insbesondere eine bevorzugt metallische Schaltfahne aufweist. Der induktive Abstandssensor ermöglicht vorteilhaft eine berührungslose oder berührende und äußerst präzise Erfassung der Position der Schaltfahne, wodurch selbst minimale Abstandsänderungen zwischen Sensor und Messkörper exakt erfasst werden können. Dies trägt zur hohen Genauigkeit der Positionsbestimmung der Stempelspitze bei. Induktive Sensoren weisen zudem bei dynamischen Prozessen, wie in rheologischen Messungen eine schnelle Reaktionszeit auf. Dadurch können schnelle Veränderungen der Position oder Verformungen des Stempels durch druck- oder temperaturbedingte Dehnung ohne Verzögerung erfasst werden, wodurch vorteilhaft die Echtzeit-Analyse der Materialeigenschaften der Prüfmasse verbessert wird. Die Verwendung einer metallischen Schaltfahne ermöglicht eine verlässliche Signalverarbeitung durch den induktiven Sensor, wodurch die elektronische Auswertung und Weiterverarbeitung der Messdaten vereinfacht und verbessert wird. So können die erfassten Positionen direkt in die Datenanalyse zur Dehnungskompensation eingebunden werden.

Gemäß einer Weiterbildung weist der Messkörper einen niedrigeren Wärmeausdehnungskoeffizienten als die Stempelspitze auf. Da sich der Messkörper bei Temperaturänderung weniger stark ausdehnt als die Stempelspitze, kann die Position der Stempelspitze präziser erfasst werden.

Dadurch lassen sich Positionsänderungen, die auf die thermische Ausdehnung zurückzuführen sind, zuverlässig erfassen, rechnerisch kompensieren und die Messgenauigkeit der mit der erfindungsgemäßen Prüfkammeranordnung ausgestatteten Geräte in einfacher Art und Weise verbessern. In Anwendungen wie der Kapillar-Rheometrie, bei denen häufig hohe Temperaturen auftreten, bleibt der Messkörper aufgrund seines geringen Wärmeausdehnungskoeffizienten formstabil. So wird die Zuverlässigkeit der Positionsmessung auch bei stark schwankenden oder hohen Temperaturen erhöht, da der Messkörper weniger empfindlich auf thermische Veränderungen reagiert. Der niedrigere Wärmeausdehnungskoeffizient des Messkörpers ermöglicht eine präzisere Bestimmung des Kontaktpunkts zwischen Stempel und Prüfmasse, da thermisch bedingte Längenänderungen der Stempelspitze und der Prüfkammer ohne Berücksichtigung der Ausdehnung des Messkörpers kompensiert werden können. Vorteilhaft werden Positionsmessungen somit konsistenter und reproduzierbarer..

Gemäß einer weiteren Ausführungsform ist der Messkörper aus einem Vollmaterial, insbesondere stabförmig oder als Hohlkörper, insbesondere als Rohr ausgebildet. Ein stabförmiger Messkörper aus Vollmaterial bietet eine hohe mechanische Stabilität und Festigkeit. Dies führt zu einer zuverlässigen Übertragung der tatsächlichen Position und damit der Dehnung der Stempelspitze ohne unerwünschte Verformungen, wodurch sich Vorteile hinsichtlich der Messgenauigkeit, insbesondere bei hohen thermischen Belastungen und Drücken in der Prüfkammer ergeben. Die gleichermaßen von der Erfindung umfasste, alternative Ausführung des Messkörpers als Hohlkörper, insbesondere als Rohr, erlaubt demgegenüber eine hohe Steifigkeit bei reduzierter Masse, wodurch sich Vorteile bzgl. der Reaktionszeit und der Sensitivität der Messungen ergeben.

In diesem Zusammenhang sieht eine weitere vorteilhafte Ausführungsform vor, dass der Messkörper als Quarzglasstab oder Quarzglasrohr ausgebildet ist. Die Verwendung von Quarzglas erweist sich als vorteilhaft, da Quarzglas einen sehr niedrigen Wärmeausdehnungskoeffizienten aufweist, d.h. sich bei Temperaturschwankungen relativ inert verhält und nur minimale Volumen- und Längenänderungen zeigt. Form und Position des Messkörpers bleiben während der Messung und der damit einhergehenden Druck- und Temperaturänderungen stabil. Quarzglas kann zudem sehr hohen Temperaturen widerstehen, ohne seine Struktur oder Form zu verändern. Dies ist insbesondere in Hochtemperaturanwendungen wie der Kapillar-Rheometrie von Vorteil, um die präzise Positions- bzw. Dehnungsmessung der Stempelspitze auch bei extremen Bedingungen sicherzustellen.

Neben der genannten Ausführung aus Quarzglas können auch alternative Materialien mit vergleichbaren Wärmeausdehnungskoeffizienten für die Herstellung des Messkörpers verwendet werden. Ohne die Erfindung hierauf zu beschränken, zählen hierzu beispielsweise Glas-Keramik-Materialien, wie z.B. unter der Handelsbezeichnung ZERODUR erhältliche Materialen mit vergleichbarer thermischer Stabilität und Temperaturbeständigkeit wie Quarzglas oder Legierungen wie Nickel-Stahl-Legierungen, die z.B. unter der Handelsbezeichnung INVAR erhältlich sind. Auch diese Materialein weisen einen sehr niedrigen Wärmeausdehnungskoeffizienten auf und sind bei Temperaturänderungen ist formstabil. Auch kann Aluminiumsilikat-Glas (z. B. Borosilikatglas) als Material für den Messkörper verwendet werden. Aluminiumsilikat-Glas weist ebenfalls einen niedrigen Wärmeausdehnungskoeffizienten auf und stellt eine kostengünstige und dennoch stabile Alternative zu Quarzglas dar. Als weitere hochstabile und gering thermisch ausdehnende Materialien können beispielsweise auch Siliziumkarbid (SiC) und Glas-Kohlenstoff für die Herstellung des Messkörpers verwendet werden.

Gemäß einer weiteren Ausführungsform der erfindungsgemäßen Prüfkammeranordnung weist die Verschiebeeinrichtung einen Spindeltrieb auf. Ein Spindeltrieb erlaubt eine exakte Steuerung und Erfassung der Weglänge und Positionierung der Stempelspitze. Dies ist vorteilhaft für die präzise Wegemessung der Verschiebeeinrichtung, da der Spindeltrieb eine gleichmäßige Bewegung ermöglicht und damit die Genauigkeit der Positionsbestimmung im gesamten System verbessert. Spindeltriebe bieten zudem eine hohe Reproduzierbarkeit, da die Positionierung unabhängig von Belastungseinflüssen stabil bleibt und daher die präzise Positionierung der Stempelspitze auch bei unterschiedlichen Belastungen ermöglichen. Die kontinuierliche und gleichmäßige Bewegung eines Spindeltriebs ermöglicht die zuverlässige Integration in Wegmesssysteme, wie zum Beispiel Linearpotentiometer, optische oder induktive Messsysteme. So lassen sich präzise und kontinuierliche Messungen der Verschiebeposition realisieren, wodurch in Verbindung mit der erfindungsgemäßen Prüfkammeranordnung die Messgenauigkeit weiter verbessert wird. Als die Erfindung nicht beschränkende Alternativantriebe für die Verschiebeanordnung kommen beispielsweise auch hydraulische Antriebe, Linearmotoren und Piezomotoren in Frage.

Gemäß einer weiteren Ausführungsform der erfindungsgemäßen Prüfkammeranordnung ist eine außerhalb der Prüfkammer, unterhalb des Prüfkammerbodens angeordnete weitere Messvorrichtung zur berührungslosen Erfassung einer Prüfkammerausdehnung mit einem den Prüfkammerboden kontaktierenden weiteren Messkörper und einem relativ zum Messkörper beabstandeten weiteren Sensors vorgesehen, wobei sich der weitere Messkörper zwischen dem Prüfkammerboden und dem weiteren Sensor erstreckt. Da sich nicht nur die Stempelspitze, sondern auch die Prüfkammer und deren Boden bei Temperatur- und Druckänderungen ausdehnen, ermöglicht die zusätzliche Messvorrichtung eine genaue Erfassung der Dehnung des Prüfkammerbodens und/oder einer darin in speziellen Ausführungen des Kapillar-Rheometers eingesetzten Extrusionsdüse bzw. deren Düsengrund. Diese Information kann rechnerisch mit der Dehnung der Stempelspitze kombiniert werden, sodass die Gesamtdehnung des Systems effektiv kompensiert und eine äußerst präzise Erfassung des Kontaktpunktes zwischen Stempel und Prüfmasse erreicht wird. Die berührungslose Erfassung der Prüfkammerausdehnung unterhalb des Prüfkammerbodens stellt vorteilhaft sicher, dass die Messvorrichtung selbst nicht von der Temperatur und dem Druck in der Prüfkammer beeinflusst wird. Der weitere Messkörper, der den Prüfkammerboden kontaktiert, liefert so Messdaten, die eine exakte Kompensation der thermischen Dehnungen der Prüfkammer ermöglichen. Die räumliche Trennung der Messvorrichtungen für die Stempelspitze und den Prüfkammerboden erlaubt eine unabhängige Erfassung der jeweiligen Dehnungen. Dies reduziert Messfehler, die durch direkte mechanische Interferenzen entstehen könnten, und ermöglicht eine präzise Aufschlüsselung der Ausdehnungseffekte, die dann getrennt oder kombiniert in die Berechnung bzw. die rechnerische Korrektur der Messergebnisse einfließen können. Da die Messvorrichtung kontinuierlich die Dehnung des Prüfkammerbodens erfasst, kann die thermische Ausdehnung dynamisch und in Echtzeit während des Betriebs des Rheometers erfasst und rechnerisch kompensiert werden. Dies ist besonders vorteilhaft, wenn sich die Temperaturen oder Drücke im Prüfkammerinneren während eines Prüfzyklus ändern, sodass jederzeit eine präzise Positionsbestimmung des Prüfkammerbodens bzw. von dessen druck- oder temperaturabhängiger Ausdehnung gewährleistet ist.

Gemäß einer Weiterbildung ist dabei ein Abstand von zwischen 0 und 10 mm, insbesondere von zwischen 0 und 5 mm, bevorzugt von zwischen 0 und 3 mm zwischen dem Sensor und dem Messkörper vorgesehen und der Sensor weist eine Messauflösung von zwischen 0,001 mm und 0,008 mm, bevorzugt von 0,005 mm auf. Vorteilhaft erlaubt auch bodenseitig der geringe Abstand zwischen Sensor und Messkörper eine äußerst präzise Erfassung der Dehnung des Prüfkammerbodens. Zusammen mit der hohen Messauflösung des Sensors werden selbst kleinste Positionsänderungen des Messkörpers aufgrund der Dehnung der Prüfkammer bzw. des Prüfkammerbodens zuverlässig erfasst, wodurch die Genauigkeit bei der Erfassung und Kompensation thermischer und mechanischer Verformungen signifikant erhöht wird. Die hohe Auflösung des Sensors ermöglicht zudem eine differenzierte Erfassung der Dehnungen unabhängig von äußeren Einflüssen. Dies führt zu einer genauen Ermittlung der tatsächlichen Positionsänderungen des Prüfkammerbodens, die zur dynamischen Kompensation der Gesamtdehnung beiträgt und so die Messgenauigkeit im Betrieb des Rheometers steigert.

Gemäß einer weiteren Ausführungsform ist der weitere Sensor als induktiver Abstandssensor ausgebildet und weist der weitere Messkörper an seinem dem Abstandssensor zugewandten Ende eine relativ zum Abstandssensor beabstandete, mit dem Abstandsensor in kommunikativer Verbindung stehende Lagemarkierung, insbesondere eine metallische Schaltfahne auf. Der induktive Abstandssensor ermöglicht vorteilhaft eine berührungslose, präzise Messung der Position der metallischen Schaltfahne am weiteren Messkörper. Dadurch wird die Dehnung des Prüfkammerbodens ohne mechanische Belastung exakt erfasst und die Genauigkeit der thermischen Dehnungskompensation verbessert. Durch die induktive Messung und der kommunikativen Verbindung zur Schaltfahne können Positionsänderungen am Prüfkammerboden unmittelbar und ohne Verzögerung kontaktlos erfasst werden und eine dynamische Kompensation der Gesamtdehnung im Rheometerbetrieb durchgeführt werden.

Gemäß einer Weiterbildung, ist eine Aufnahme zur lagefixierten Festlegung des Messkörpers am Prüfkammerboden vorgesehen, wobei in der Aufnahme bevorzugt wenigstens ein Spannmittel, insbesondere eine Druckfeder, zur lagefixierten Festlegung des Messkörpers vorgesehen ist. Die lagefixierte Festlegung des Messkörpers am Prüfkammerboden bietet den Vorteil, dass der Messkörper auch bei thermischen oder mechanischen Belastungen in einer festen Position verbleibt und so eine konsistente und genaue Erfassung der Prüfkammerausdehnung ermöglicht wird. Ohne die Erfindung hierauf zu beschränken, stehen selbstverständlich alternative Spannmittel zur lagefixierten Festlegung des Messkörpers am Prüfkammerboden zur Verfügung, die im Zusammenhang mit der vorliegenden Erfindung alternativ oder ergänzend eingesetzt werden können. So kann die Festlegung über ein Elastomer- oder Gummielement, Klemm- oder Spannschrauben, mittels magnetischer Fixierung, durch Klemmringe oder -buchsen oder eine formschlüssige Halterung (z. B. durch Passstifte) erfolgen. Die Auswahl der jeweils geeigneten Spannmittel kann in Abhängigkeit von den spezifischen Gegebenheiten und Anforderungen durch das jeweilige Gerät, dass die erfindungsgemäße Prüfkammeranordnung aufweist, angepasst werden. Auch besteht die Möglichkeit verschiedene Spannmittel miteinander kombiniert einzusetzen.

Gemäß einer weiteren Ausführungsform weist der weitere Messkörper einen niedrigeren Wärmeausdehnungskoeffizienten als die Prüfkammer und/oder der Prüfkammerboden auf. Als vorteilhaft erweist sich auch hier, dass sich der weitere Messkörper sich bei Temperaturänderungen weniger stark ausdehnt als die Prüfkammer oder deren Boden und somit in seiner Position und Form stabil bleibt. Dies ermöglicht eine präzisere Erfassung der Ausdehnung des Prüfkammerbodens. Die geringere thermische Ausdehnung des Messkörpers gewährleistet, dass thermisch bedingte Positionsänderungen des Messkörpers selbst, auch bei hohen Temperaturen minimal bleiben, sodass eine hohe Messgenauigkeit erreicht wird. Durch die thermische Stabilität des Messkörpers kann die tatsächliche Ausdehnung des Prüfkammerbodens exakt erfasst und dynamisch rechnerisch kompensiert werden.

Gemäß einer weiteren Ausführungsform ist der weitere Messkörper aus einem Vollmaterial, insbesondere stabförmig oder als Hohlkörper, insbesondere als Rohr ausgebildet. Ein stabförmiger Messkörper aus Vollmaterial gewährleistet hierbei vorteilhaft, dass eine stabile und präzise Erfassung der Prüfkammerausdehnung erreicht wird. Dies ermöglicht eine konsistente Messung, selbst unter hohen Belastungen. Die Ausführung als Hohlkörper (Rohr) reduziert das Gewicht und verringert die thermische Masse, sodass der Messkörper schneller auf Temperaturänderungen reagieren kann. Dies minimiert thermische Verformungseinflüsse und sorgt für eine genauere Kompensation der Ausdehnung des Prüfkammerbodens. Zudem kann überschüssiges Material aus der Prüfkammer über das Rohr abgelassen werden. Die Wahl zwischen Vollmaterial und Hohlkörper ermöglicht vorteilhaft eine optimale Anpassung an spezifische Betriebs- und Messanforderungen.

Gemäß einer Weiterbildung ist in diesem Zusammenhang der weitere Messkörper als Quarzglasstab oder Quarzglasrohr ausgebildet. Quarzglas weist einen sehr niedrigen Wärmeausdehnungskoeffizienten auf, sodass die thermisch bedingte Verformung des Messkörpers erheblich reduziert wird und die Position des Messkörpers stabil bleibt. Eine präzise Erfassung der Prüfkammerausdehnung und eine zuverlässige Kompensation thermischer Effekte wird damit vorteilhaft verbessert. Durch die thermische Stabilität des Quarzglas-Messkörpers wird eine genaue und konsistente Messung der Prüfkammerausdehnung sichergestellt und die dynamische Kompensation der Ausdehnung im Rheometerbetrieb präziser. Selbstverständlich können auch hier die zuvor bereits beschriebene Alternativen zu Quarzglas eingesetzt werden. Um Wiederholungen zu vermeiden wird in diesem Zusammenhang auf die Ausführungen zum ersten Messkörper verwiesen.

Gemäß einer Weiterbildung des Kapillar-Rheometers ist der Prüfkammerboden geschlossen oder mit einer Extrusionsdüse versehen ausgebildet. Vorteilhaft wird hierdurch bei im Übrigen identischer Ausführung der Prüfkammer die Flexibilität für unterschiedliche Anwendungsanforderungen erhöht. Ein geschlossener Prüfkammerboden erlaubt genaue Druck- und Temperaturmessungen innerhalb der Prüfkammer, während eine Extrusionsdüse den kontrollierten Austritt der Prüfmasse ermöglicht. Dies ist vorteilhaft, um je nach Bedarf unterschiedliche Fließ- und Verformungseigenschaften bei gleichzeitiger Kompensation von Dehnungseffekten präzise zu analysieren. Insbesondere in Verbindung mit einem Messkörper mit niedrigem Wärmeausdehnungskoeffizienten (wie einem Quarzglasstab) können temperaturbedingte messtechnisch erfasste Verformungen des Stempels, der Prüfkammer, des Prüfkammerbodens, einer im Prüfkammerboden eingesetzten Extrusionsdüse bzw. deren Düsengrundes effektiv rechnerisch kompensiert werden, wodurch die Messgenauigkeit auch unter hohen Druck- und Temperaturbedingungen gesteigert wird.

Selbstverständlich sind auch Ausführungsformen des Kapillar-Rheometers mit erfindungsgemäßen Prüfkammeranordnungen, die nur im Bereich der Stempelstange bzw. des Stempels oder nur im Bereich des Prüfkammerbodens angeordneten Messvorrichtungen aufweisen, von der Erfindung umfasst.

Die obigen Ausführungsformen und Weiterbildungen lassen sich, sofern sinnvoll, beliebig miteinander kombinieren. Weitere mögliche Ausführungsformen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand von Ausführungsbeispielen unter Bezugnahme auf die beiliegenden Figuren der Zeichnungen näher erläutert. Von den Figuren zeigen:
- Fig. 1a: eine schematische Darstellung eines Kapillar-Rheometers gemäß eines Ausführungsbeispiels der Erfindung in Seitenansicht;
- Fig. 1b: eine schematische Darstellung des Kapillar-Rheometers des Ausführungsbeispiels aus Fig. 1a in Schnittdarstellung;
- Fig. 2: eine schematische Darstellung eines Ausschnitts der Prüfkammeranordnung gemäß eines weiteren Ausführungsbeispiels der Erfindung in Schnittdarstellung;
- Fig. 3: eine schematische Detailansicht eines Ausschnitts der Prüfkammeranordnung gemäß eines Ausführungsbeispiels der Erfindung in Schnittdarstellung;
- Fig. 4: eine schematische Detailansicht eines Ausschnitts der Prüfkammeranordnung gemäß eines Ausführungsbeispiels der Erfindung in Schnittdarstellung;
- Fig. 5: eine schematische Detailansicht eines Ausschnitts der Prüfkammeranordnung gemäß eines Ausführungsbeispiels der Erfindung in Schnittdarstellung;
- Fig. 6a: eine schematische Darstellung eines Kapillar-Rheometers gemäß eines weiteren Ausführungsbeispiels der Erfindung in Schnittdarstellung; und
- Fig. 6b: eine schematische Darstellung eines Ausschnitts der Prüfkammeranordnung gemäß des Ausführungsbeispiels aus Fig. 6a der Erfindung in Schnittdarstellung.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Obwohl vorliegend spezifische Ausführungsformen und Weiterbildungen dargestellt und beschrieben sind, wird der Fachmann bevorzugen, dass eine Vielzahl von alternativen und/oder gleichartigen Ausführungen die dargestellten und beschriebenen spezifischen Ausführungsbeispiele ersetzen können, ohne vom Umfang der vorliegenden Erfindung abzukehren. Diese Anmeldung soll allgemein alle Abwandlungen oder Änderungen der hierin beschriebenen spezifischen Ausführungsbeispiele abdecken.

Die beiliegenden Figuren sollen ein weiteres Verständnis von Ausführungsformen der Erfindung vermitteln und dienen im Zusammenhang mit der Beschreibung der Erklärung von Prinzipien und Konzepten der Erfindung. Andere Ausführungsbeispiele und viele der genannten Vorteile ergeben sich im Hinblick auf die Zeichnungen. Die Zeichnungen sind lediglich als schematische Zeichnungen zu verstehen und die Elemente der Zeichnungen sind nicht notwendigerweise maßstabsgetreu zueinander dargestellt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

Gestrichelte Linien in den Figuren der Zeichnungen verdeutlichen, dass die Verbindungen zwischen den die gestrichelten Linien verbindenden Komponenten nicht zwingend physischen Kontakt miteinander haben müssen, sondern gleichermaßen drahtlos zueinander gekoppelt sein können.

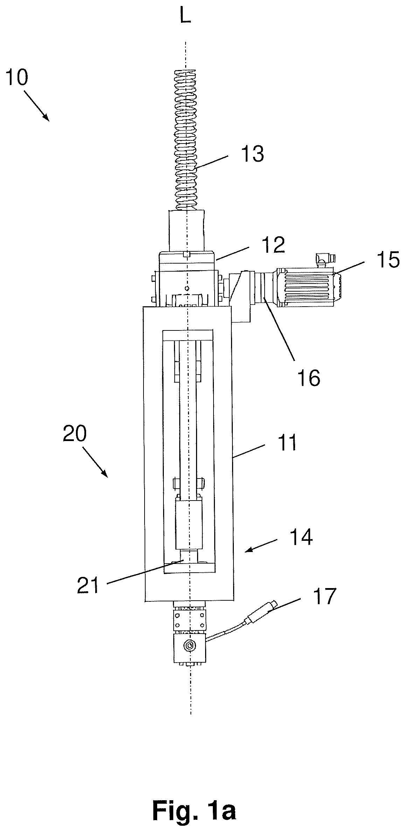

Fig. 1a zeigt in Seitenansicht eine schematische Darstellung eines Teils eines Kapillar-Rheometers 10 gemäß eines Ausführungsbeispiels der Erfindung, der die erfindungsgemäße Prüfkammeranordnung 20 enthält. Schematisch dargestellt ist ein zentrales Gehäuse 11, in dem die Hauptkomponenten des Kapillar-Rheometers 10 untergebracht sind. Das dargestellte Gerät weist eine Verschiebeinrichtung 12 auf, die mittels eines Spindelantriebes 13, einen in Fig. 1a verdeckten Stempel 14 linear entlang der Längsachse L der Vorrichtung verschiebt. Seitlich am Gerät ist ein Motor 15 angebracht, der über eine Welle 16 mit dem Spindelantrieb 13 verbunden ist, um die Linearbewegung auszuführen. Am unteren Ende des Gehäuses 11 befindet sich die erfindungsgemäße Prüfkammeranordnung 20 mit einem Druckmesssensor 17 zur Messung der rheologischen Eigenschaften des in der Prüfkammer 21 eingebrachten und über den Stempel 14 druckbeaufschlagten Prüfmaterials. Die Prüfkammer 21 ist beheizbar ausgebildet.

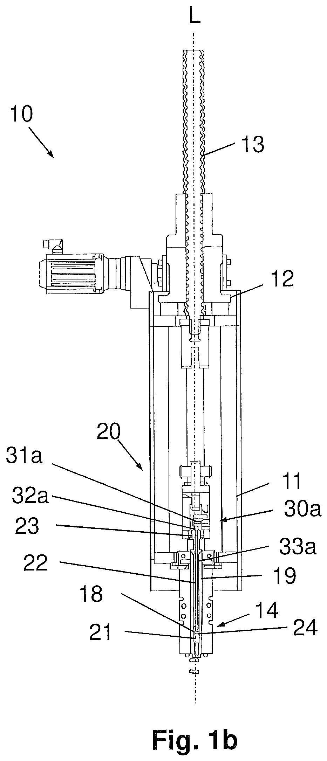

Fig. 1b zeigt eine schematische Darstellung des Teils des Kapillar-Rheometers 10 gemäß des in Fig. 1a dargestellten Ausführungsbeispiels in einer Schnittdarstellung. Die Abbildung zeigt die Prüfkammeranordnung 20 und deren Aufbau im Detail. Die Prüfkammeranordnung 20 verfügt über eine im Gerät festlegbare Prüfkammer 21, die sich in Richtung der Längsachse L erstreckt. Die Prüfkammer 21 wird mit einem zu untersuchenden Prüfmaterial befüllt, das durch Beheizung der Prüfkammer 21 verflüssigt wird. In die Prüfkammer 21 wird bei Durchführung der Messung ein Stempel 14 eingeführt. Der Stempel 14 weist eine Stempelspitze 18 auf, der auf dem Prüfmaterial aufliegt und dieses druckbeaufschlagt, sobald die Verschiebeinrichtung 12, angetrieben durch den Spindelantrieb 13, linear entlang der Längsachse L im Gerät verschoben wird. Der Stempel 14 weist eine Stempelstange 19 auf, die die Stempelspitze 18 in Richtung der Verschiebeeinrichtung 12, die auch als Stempelschlitten bezeichnet werden kann, verlängert.

Im Ausführungsbeispiel ist die Stempelstange 19 mit einer zentralen Bohrung 22 versehen, die sich vom oberen Ende 23 der Stempelstange 19, das in der Verschiebeeinrichtung 12 festgelegt ist, bis zur Stempelspitze 18 erstreckt. Die Bohrung 22 durchstößt den Stempelboden 24 jedoch nicht, sondern endet in der Stempelspitze 18. In der Verschiebeeinrichtung 12 ist die vom oberen Ende 23 der Stempelstange 19 entkoppelte Messvorrichtung 30a angeordnet. Die Messvorrichtung 30a umfasst einen induktiven Abstandssensor 31a, der den Abstand bzw. die Abstandsänderung zwischen einem in der Bohrung 22 eingesetzten und eine Schaltfahne 32a aufweisenden Messkörper 33a und dem induktiven Abstandssensor 31a erfasst. Der Messkörper 33a besteht aus einem Material mit einem geringeren Wärmeausdehnungskoeffizienten als die Stempelspitze 18, beispielsweise aus Quarzglas. Die Anordnung des Messkörpers 33a innerhalb der Bohrung 22 der Stempelstange 19 ermöglicht es, thermische Ausdehnungen des Stempels 14 zu erfassen und rechnerisch zu kompensieren, da sich der Messkörper 33a bei Temperaturveränderungen weniger stark ausdehnt als das umgebende Material der Stempelspitze 18 und seine Position daher hauptsächlich nur aufgrund der Dehnung der Stempelspitze 18 ändert. Der Messkörper 33a steht innenseitig in der Stempelspitze 18 auf dem Stempelboden 24 auf. Aus den über den Abstandssensor 31a erfassten Messwerten kann eine Dehnung des Stempels 14 bzw. des Stempelbodens 24 während der rheologischen Messung abgeleitet werden, die auftritt, wenn der Stempel 14 temperatur- und druckbeaufschlagt wird. Die so erfassten Messwerte können zur Dehnungskompensation in der Auswertung der rheologischen Messung herangezogen werden, um die Messergebnisse entsprechend rechnerisch zu korrigieren.

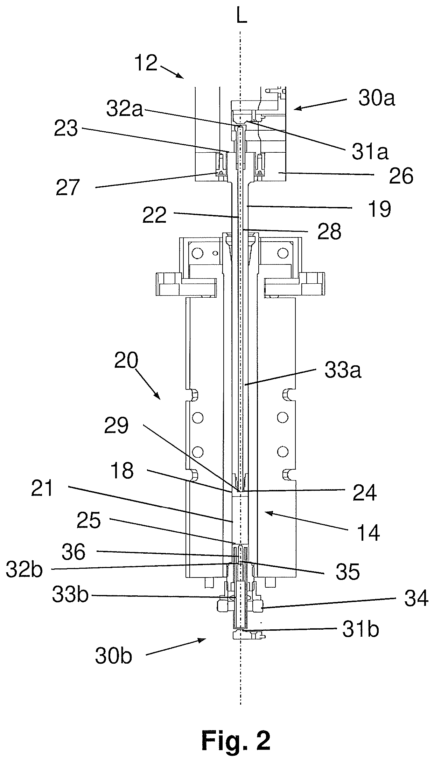

Fig. 2 zeigt eine schematische Darstellung eines Ausschnitts der Prüfkammeranordnung 20 gemäß eines weiteren Ausführungsbeispiels der Erfindung in Schnittdarstellung. In der Ausführungsform gemäß Fig. 2 ist am Stempel 14 eine Messvorrichtung 30a sowie am Prüfkammerboden 25 eine weitere Messvorrichtung 30b zur Erfassung einer temperatur- und druckbedingten Dehnung einerseits des Stempels 14 bzw. der Stempelspitze 18 und anderseits des Prüfkammerbodens 25 bzw. der dort eingesetzten Extrusionsdüse 36 oder deren Düsengrund 35 angeordnet. Beide Messvorrichtungen 30a, verfügen im Ausführungsbeispiel über induktive Abstandssensoren 31a, b, die vom Stempel 14 bzw. dem Prüfkammerboden 25 entkoppelt angeordnet sind. Die Abstandssensoren 31a, b erfassen eine Positionsänderung von im Stempel 14 bzw. am Prüfkammerboden 25 angeordneten Messkörpern 33a, b.

Die dem Stempel 14 zugeordnete Messvorrichtung 30a ist in die in Fig. 2 nur ausschnittsweise dargestellte Verschiebeeinrichtung 12 integriert vorgesehen, während die weitere Messvorrichtung 30b am Prüfkammerboden 25 eine den weiteren Messkörper 33b außenseitig am Prüfkammerboden 25 festlegende Aufnahme 34 aufweist.

Das obere Ende 23 der den Stempel 14 verlängernden Stempelstange 19 ist in einem in der Verschiebeanordnung 12 integrierten Druckstück 26 festgelegt, das über Andrückschrauben 27 vorgespannt werden kann. Um die Längenänderung des Stempels 14 in Folge von Wärmeausdehnung und Kompression durch Druckkraft erfassen zu können, ist die Stempelstange 19 entlang ihrer Längsachse L durchbohrt. In diese Bohrung 22 ist im Ausführungsbeispiel ein Quarzglasstab 28 eingeführt, an dessen oberen Ende eine Schaltfahne 32a aus Stahl angebracht, beispielsweise aufgeklebt, ist. Das untere Ende 29 des Quarzglasstabes 28 steht auf dem innenseitigen Stempelboden 24 in der Stempelspitze 18 auf. Die Stempelspitze 18 ist im Ausführungsbeispiel mit der Stempelstange 19 verschraubt, wobei alternativ eine Steck- oder Rastverbindung ebenfalls möglich ist. Oberhalb der Schaltfahne 32a befindet sich der induktive Abstandssensor 31a, der im Ausführungsbeispiel höhenverstellbar in der Messvorrichtung 30a angebracht ist. Der induktive Abstandssensor 31a weist eine hochpräzise Ausführung mit einer Messauflösung von 0,005 mm in einem Messbereich von 0 bis 3 mm auf. Verändert sich die Position der Stempelspitze 18, wird diese Positionsänderung relativ zur Position der Verschiebeanordnung 12, die auch als Stempelschlitten bezeichnet wird, erfasst und kann kompensiert werden.

In ähnlicher Art und Weise werden auch die Dehnungen der Prüfkammer 21, auch als Barrel bezeichnet, bzw. des Prüfkammerbodens 25 erfasst, um die Position des Prüfkammerbodens 25 bzw. des Düsengrundes 35 einer im Prüfkammerboden 25 eingesetzten Extrusionsdüse 36 zu bestimmen. Die weitere Messvorrichtung 30b am Prüfkammerboden 25 ist ebenfalls mit einem induktiven Abstandssensor 31b ausgestattet, der auf eine metallische Schaltfahne 32b am weiteren Messkörper 33b ausgerichtet ist. Der weitere Messkörper 33b, der zwischen dem Prüfkammerboden 25 und dem induktiven Abstandssensor 31b positioniert ist, dehnt sich weniger aus als der Prüfkammerboden 25 bzw. der Düsengrund 35 selbst, wodurch die thermische Verformung des Prüfkammerbodens 25 bzw. des Düsengrundes 35 genau erfasst werden kann. Der induktiven Abstandssensor 31b misst die Distanz zur metallischen Schaltfahne 32b und ermöglicht so eine kontinuierliche Überwachung und messtechnische Erfassung der Ausdehnung des Prüfkammerbodens 25 bzw. des Düsengrundes 35.

Anhand der mit den beiden Messvorrichtungen 30a, b bzw. deren Wegmesssystemen erfassten Messwerte kann der Abstand zwischen der Stempelspitze 18 einerseits und dem Prüfkammerboden 25 bzw. dem Düsengrund 35 andererseits präzise ermittelt werden, was vor allem für pVT-Messungen, durch Bestimmung des Volumens zwischen einer Düse, beispielsweise Extrusionsdüse 36 und der Stempelspitze 18 von großer Bedeutung ist.

Selbstverständlich sind auch Ausführungsformen des Kapillar-Rheometers 10 mit einer erfindungsgemäßen Prüfkammeranordnung 20 möglich, die nur die im Bereich der Stempelstange 19 bzw. des Stempels 14 oder nur die im Bereich des Prüfkammerbodens 25 angeordnete Messvorrichtung 30a, b aufweisen.

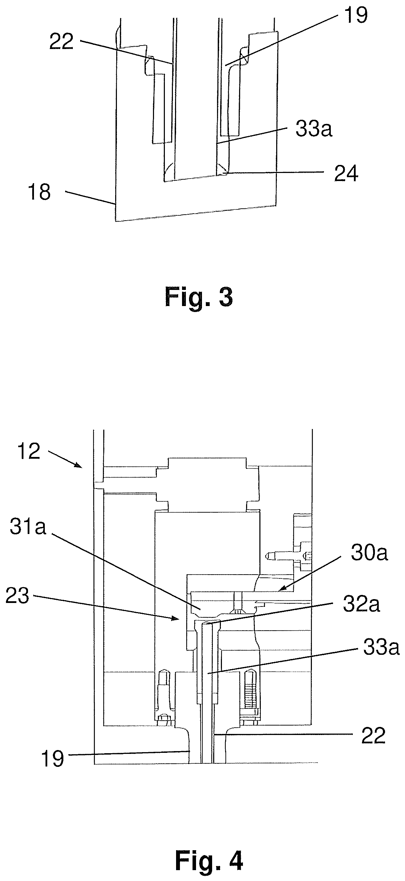

Fig. 3 zeigt eine schematische Darstellung des Stempelbodens 24 mit dem darin angeordneten Messkörper 33a, der auf dem Stempelboden 24 aufsteht. Der Messkörper 33a ist in einer zentralen Bohrung 22 in der Stempelstange 19 positioniert und durchragt diese bis zum Stempelboden 24. Der Messkörper 33a besteht aus einem Material mit einem geringeren Wärmeausdehnungskoeffizienten als die Stempelspitze 18. Da sich der Messkörper 33a bei Temperaturveränderungen weniger stark ausdehnt als die Stempelspitze 18, entspricht eine über den induktiven Abstandssensor 31a in der Messvorrichtung 30a (vgl. Fig. 2) erfasste Positionsänderung der Ausdehnung der Stempelspitze 18 infolge Druck- oder Temperatureinwirkung während des rheologischen Prüfvorganges.

Fig. 4 zeigt eine detaillierte Schnittdarstellung des oberen Endes 23 der Stempelstange 19, der Messvorrichtung 30a und eines Teils der Verschiebeeinrichtung 12 eines Kapillar-Rheometers 10 gemäß einem Ausführungsbeispiel der Erfindung. Am oberen Ende 23 der Stempelstange 19 ist die Messvorrichtung 30a zur Erfassung der Position des in einer Bohrung 22 im Stempel 14 bzw. der Stempelstange 19 eingesetzten Messkörpers 33a integriert. Der Messkörper 33a besteht aus einem Material mit einem geringeren Wärmeausdehnungskoeffizienten als die Stempelspitze 18 und ermöglicht eine exakte Positionsbestimmung der Stempelspitze 18 durch Messung. Die Messwerte dienen zur Dehnungskompensation bei der Auswertung der rheologischen Prüfergebnisse.

Am Messkörper 33a ist eine dem Abstandssensor 31a zugewandte metallische Schaltfahne 32a angebracht, die in kommunikativer Verbindung mit dem induktiven Abstandssensor 31a steht, der wiederum in der Verschiebeeinrichtung 12 integriert, jedoch von Stempel 14 bzw. Messkörper 33a entkoppelt ist. Der induktive Abstandssensor 31a erfasst die Position der metallischen Schaltfahne 32a berührungslos und mit hoher Präzision. Diese Anordnung erlaubt es, kleinste Positionsänderungen des Stempels 18 aufgrund thermischer Ausdehnungen oder mechanischer Belastungen messtechnisch zu erfassen und nachfolgend rechnerisch, beispielsweise bei Bestimmung des Volumens zwischen einer Düse, beispielsweise Extrusionsdüse 36 und der Stempelspitze 18, zu kompensieren.

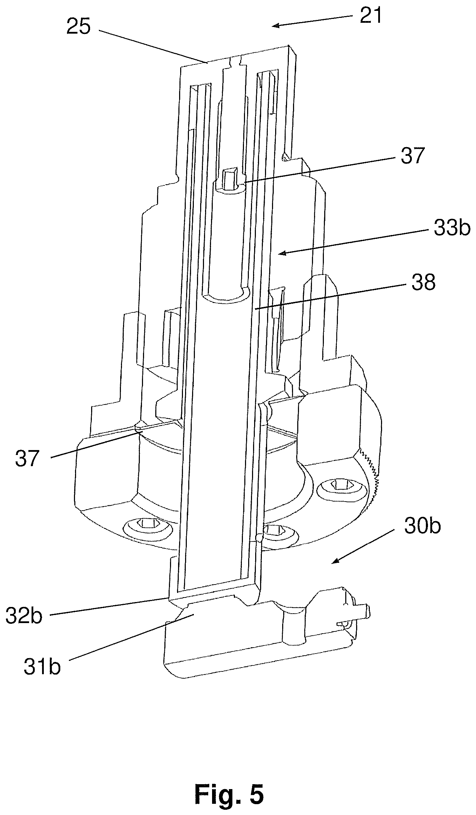

Fig. 5 zeigt eine schematische Darstellung der weiteren Messvorrichtung 30b am Prüfkammerboden 25, gemäß eines weiteren Ausführungsbeispiels der Erfindung. Der weitere Messkörper 33b ist im Ausführungsbeispiel als Rohr ausgebildet und in einer Aufnahme 34 am Prüfkammerboden 25 aufgenommen. Die Aufnahme 34 dient der stabilen Lagefixierung des Messkörpers 33b und ist über eine Druckfeder 37 am Prüfkammerboden 25 befestigt. Die Dehnungskompensation am Prüfkammerboden 25 erfolgt nach dem gleichen Funktionsprinzip wie an der Stempelstange 19, auch wenn sich der Aufbau unterscheidet. Anstelle eines Quarzglasstabes 28 wird hier ein Quarzglasrohr 38 verwendet, um überschüssiges Material aus der Prüfkammer 21 ablassen zu können oder im Falle einer leichten Anpassung der Schaltfahne 32b auch bei Extrusionsprozessen zu messen. Zur sicheren Aufrechterhaltung des Kontakts zwischen Quarzglasrohr 38 und Prüfkammerboden 25 bzw. Düsengrund 35 wird die Druckfeder 37 eingesetzt. Die Erfassung der Längenänderung erfolgt dann in gleicher Weise wie beim Stempel 14, wobei hierzu ein weiterer induktiver Abstandssensor 31b vorgesehen ist, der berührungslos die Positionsänderung einer am weiteren Messkörper 33b befestigten metallischen Schaltfahne 32b und damit die Dehnung des Prüfkammerbodens 25 bzw. des Düsengrundes 37 erfasst.

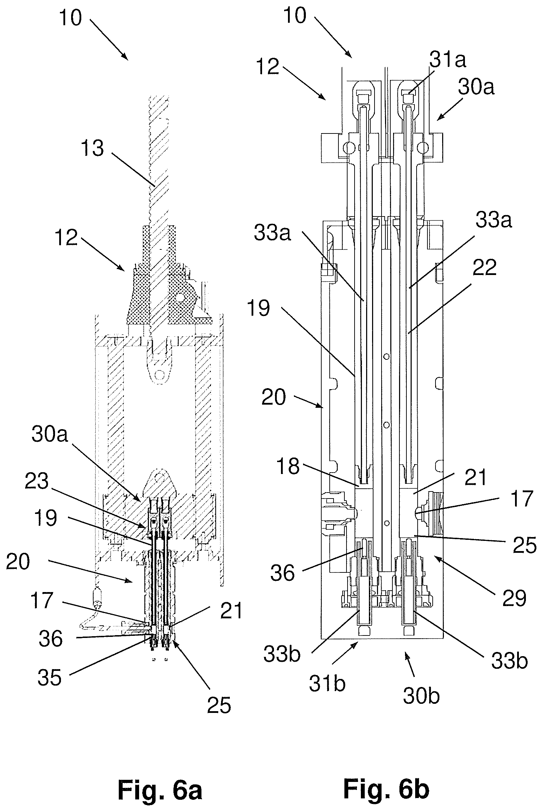

Fig. 6a zeigt eine schematische Darstellung eines Kapillar-Rheometers 10 gemäß eines weiteren Ausführungsbeispiels der Erfindung in Schnittdarstellung. Im Ausführungsbeispiel sind zwei nebeneinander angeordneten Prüfkammeranordnungen 20 vorgesehen. Die Erfindung ist hierauf nicht beschränkt. Selbstverständlich können auch mehr als zwei der erfindungsgemäßen Prüfkammeranordnungen 20 in einem Gerät angeordnet werden, um den Probendurchsatz des Gerätes zu erhöhen.

Die gezeigt Konfiguration ermöglicht simultane Messungen in beiden Prüfkammern 21 und die Erfassung von Dehnungen in den Prüfkammeranordnungen 20 zur Dehnungskompensation in den Ergebnissen der Prüfdurchläufe. Beide Prüfkammeranordnungen 20 sind identisch aufgebaut und verfügen jeweils über eine Stempelstange 19, die in die Prüfkammer 21 hineinragt und von oben über eine gemeinsame Verschiebeeinrichtung 12 mit einem einzigen zentralen Spindelantrieb 13 bewegt werden. Die Verschiebeeinrichtung 12 kontrolliert den auf die Prüfmasse ausgeübten Druck. Der Aufbau mit zwei Prüfkammern 21 ermöglicht es, verschiedene Proben parallel zu testen oder mehrere Messreihen unter identischen Bedingungen durchzuführen, wodurch die Vergleichbarkeit der Ergebnisse verbessert wird.

Jede Prüfkammer 21 weist eine wie zuvor beschriebene Messvorrichtung 30a, b sowohl am oberen Ende 23 der Stempelstange 19 wie auch am Prüfkammerboden 25 bzw. dem Düsengrund 35 einer dort vorgesehene Extrusionsdüse 36, zur Erfassung der temperatur- oder druckbedingten Dehnungen in der den Prüfkammern 21, auf. Seitlich an jeder Prüfkammer 21 ist ein Druckmesssensor 17 zur Messung der rheologischen Eigenschaften des in der Prüfkammer 21 eingebrachten und über den Stempel 14 druckbeaufschlagten Prüfmaterials angebracht.

Fig. 6b zeigt eine schematische Darstellung eines Ausschnitts der Prüfkammeranordnung 20 gemäß des Ausführungsbeispiels aus Fig. 6a in Schnittdarstellung. Dargestellt sind hierbei die beiden nebeneinander angeordneten Prüfkammeranordnungen 20 des Kapillar-Rheometers 10. Erkennbar sind sowohl die Messkörper 33a, b wie auch die Anordnung der Messvorrichtungen 30a, b mit den jeweiligen induktiven Abstandssensoren 31a, b.

In jeder Prüfkammer 21 sind Stempelstangen 19 eingesetzt, die von der gemeinsamen Verschiebeeinrichtung 12 angetrieben, die Stempel 14 bewegen, um über die Stempelspitzen 18 die nach Aufheizung der Prüfkammern 21 aufgeschmolzenen Prüfmassen in den jeweiligen Prüfkammern 21 kontrolliert mit Druck zu beaufschlagen. Jeder Stempelstange 19 ist eine Messvorrichtung 30a zur berührungslosen Erfassung der Positionsänderung von in den Bohrungen 22 in den Stempelstangen 19 eingesetzten Messkörpern 33a.

Am unteren Ende 29 jeder Prüfkammer 21 sind weitere Messvorrichtungen 30b zur Erfassung der thermischen und druckbedingten Dehnung der Prüfkammerböden 25 bzw. der darin angeordneten Extrusionsdüsen 36 angebracht. Die weiteren Messvorrichtung 30b umfassen ebenfalls Messkörper 33b sowie induktive Abstandsensoren 31b. Die induktiven Abstandsensoren 31b messen die Positionsänderung der Messkörper 33b, die durch die Dehnung der Prüfkammerböden 25 und/oder Extrusionsdüsen 36 bewirkt wird. Die erfassten Werte dienen der Dehnungskompensation bei der Auswertung der Ergebnisse der rheologischen Materialprüfungen in den Prüfkammern 21. Seitlich an jeder Prüfkammer 21 ist ein Druckmesssensor 17 zur Messung der rheologischen Eigenschaften des in der Prüfkammer 21 eingebrachten und über den Stempel 14 druckbeaufschlagten Prüfmaterials angebracht.

Selbstverständlich sind auch Ausführungsformen des Kapillar-Rheometers 10 mit erfindungsgemäßen Prüfkammeranordnungen 20 möglich, die nur die im Bereich der Stempelstange 19 bzw. des Stempels 14 oder nur die im Bereich des Prüfkammerbodens 25 angeordneten Messvorrichtungen 30a, b aufweisen.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 10: Kapillar-Rheometer
- 11: Gehäuse
- 12: Verschiebeinrichtung
- 13: Spindelantrieb
- 14: Stempel
- 15: Motor
- 16: Welle
- 17: Druckmesssensor
- 18: Stempelspitze
- 19: Stempelstange
- 20: Prüfkammeranordnung
- 21: Prüfkammer
- 22: Bohrung
- 23: oberes Ende
- 24: Stempelboden
- 25: Prüfkammerboden
- 26: Druckstück
- 27: Andrückschraube
- 28: Quarzglasstab
- 29: unteres Ende
- 30a, b: Messvorrichtung
- 31a, b: Abstandssensor
- 32a, b: Schaltfahne
- 33a, b: Messkörper
- 34: Aufnahme
- 35: Düsengrund
- 36: Extrusionsdüse
- 37: Druckfeder
- 38: Quarzglasrohr
- L: Längsachse

## Patentansprüche

1. Prüfkammeranordnung (20), insbesondere in einem Kapillar-Rheometer (10), umfassend:
- eine mit einer Prüfmasse befüllbare, insbesondere beheizbare Prüfkammer (21) mit einem Prüfkammerboden (25);
- einen in der Prüfkammer (21) linear verschiebbar angeordneten Stempel (14) mit einer Stempelstange (19) und einer mit einem ersten Ende der Stempelstange (19) verbundenen, die Prüfmasse druckbeaufschlagenden Stempelspitze (18);
- eine ein zweites Ende der Stempelstange (19) aufnehmende Verschiebeeinrichtung (12) für eine Verschiebung des Stempels (14) in der Prüfkammer (21) in Richtung des Prüfkammerbodens (25); und
- eine in der Verschiebanordnung (12) angeordnete, von dem Stempel (14) entkoppelte und einen definierten Abstand zum zweiten Ende der Stempelstange (19) aufweisende, mit der Verschiebeanordnung (12) verschiebbare Messvorrichtung (30a) zur Erfassung einer Stempeldehnung,
wobei in der Stempelstange (19) eine sich in Richtung einer Längsachse (L) der Stempelstange (19) zwischen einem Grund der Stempelspitze (18) und dem zweiten Ende erstreckende Bohrung (22) zur Aufnahme eines sich zwischen dem Grund der Stempelspitze (18) und dem zweiten Ende erstreckenden Messkörpers (33a) eingebracht ist und die Messvorrichtung (30a) einen relativ zum Messkörper (33a) beanstandet angeordneten Sensor zur Erfassung eines Abstandes zwischen dem Messkörper (33a) und der Messvorrichtung (30a) aufweist.

2. Prüfkammeranordnung (20) nach Anspruch 1, wobei ein Abstand von zwischen 0 und 10 mm, insbesondere von zwischen 0 und 5 mm, bevorzugt von zwischen 0 und 3 mm zwischen dem Sensor und dem Messkörper (33a) vorgesehen ist und der Sensor eine Messauflösung von zwischen 0,001 mm und 0,008 mm, bevorzugt von 0,005 mm aufweist.

3. Prüfkammeranordnung (20) nach Anspruch 1 oder 2, wobei der Sensor als induktiver Abstandssensor (31a) ausgebildet ist und der Messkörper (33a) an seinem dem Abstandssensor (31a) zugewandten Ende eine mit dem Abstandsensor (31a) in kommunikativer Verbindung stehende Lagemarkierung, insbesondere eine bevorzugt metallische Schaltfahne (32a) aufweist.

4. Prüfkammeranordnung (20) nach einem der vorhergehenden Ansprüche, wobei der Messkörper (33a) einen niedrigeren Wärmeausdehnungskoeffizienten als die Stempelspitze (18) aufweist.

5. Prüfkammeranordnung (20) nach einem der vorhergehenden Ansprüche, wobei der Messkörper (33a) aus einem Vollmaterial, insbesondere stabförmig oder als Hohlkörper, insbesondere als Rohr ausgebildet ist.

6. Prüfkammeranordnung (20) nach einem der vorhergehenden Ansprüche, wobei der Messkörper als Quarzglasstab (28) oder Quarzglasrohr (38) ausgebildet ist.

7. Prüfkammeranordnung (20) nach einem der vorhergehenden Ansprüche, wobei die Verschiebeeinrichtung (12) einen Spindeltrieb (13) aufweist.

8. Prüfkammeranordnung (20) nach einem der vorhergehenden Ansprüche, wobei eine außerhalb der Prüfkammer (21) unterhalb des Prüfkammerbodens (25) angeordnete weitere Messvorrichtung (30b) zur berührungslosen Erfassung einer Prüfkammerausdehnung, mit einem den Prüfkammerboden (25) kontaktierenden weiteren Messkörper (33b) und einem relativ zum Messkörper (33b) beabstandeten weiteren Sensor vorgesehen ist und wobei sich der weitere Messkörper (33b) zwischen dem Prüfkammerboden (35) und dem weiteren Sensor erstreckt.

9. Prüfkammeranordnung (1) nach Anspruch 8, wobei ein Abstand von zwischen 0 und 10 mm, insbesondere von zwischen 0 und 5 mm, bevorzugt von zwischen 0 und 3 mm zwischen dem Sensor und dem Messkörper (33b) vorgesehen ist und der Sensor eine Messauflösung von zwischen 0,001 mm und 0,008 mm, bevorzugt von 0,005 mm aufweist.

10. Prüfkammeranordnung (1) nach Anspruch 8 oder 9, wobei der weitere Sensor als induktiver Abstandssensor (31b) ausgebildet ist und der weitere Messkörper (33b) an seinem dem Abstandssensor (31b) zugewandten Ende eine relativ zum Abstandssensor (31b) beabstandete, mit dem Abstandsensor (31b) in kommunikativer Verbindung stehende Lagemarkierung, insbesondere eine metallische Schaltfahne (32b) aufweist.

11. Prüfkammeranordnung (1) nach einem der Ansprüche 8 bis 10, wobei eine Aufnahme (34) zur lagefixierten Festlegung des Messkörpers (33b) am Prüfkammerboden (25) vorgesehen ist, und wobei in der Aufnahme (34) bevorzugt wenigstens ein Spannmittel, insbesondere eine Druckfeder (37), zur lagefixierten Festlegung des Messkörpers (33b) vorgesehen ist.

12. Prüfkammeranordnung (20) nach einem der Ansprüche 8 bis 11, wobei der weitere Messkörper (33b) einen niedrigeren Wärmeausdehnungskoeffizienten als die Prüfkammer (21) und/oder der Prüfkammerboden (25) aufweist.

13. Prüfkammeranordnung (20) nach einem der Ansprüche 8 bis 12, wobei der weitere Messkörper (33b) aus einem Vollmaterial, insbesondere stabförmig oder als Hohlkörper, insbesondere als Rohr ausgebildet ist.

14. Prüfkammeranordnung (20) nach einem der Ansprüche 8 bis 13, wobei der weitere Messkörper (33b) als Quarzglasstab (28) oder Quarzglasrohr (38) ausgebildet ist.

15. Kapillar-Rheometer (10) mit einer Prüfkammeranordnung (20) nach einem der Ansprüche 1 bis 14.

16. Kapillar-Rheometer (10) nach Anspruch 15, wobei der Prüfkammerboden (25) geschlossen oder mit einer Extrusionsdüse (36) versehen ausgebildet ist.
